# EUROPÄISCHE PATENTSCHRIFT

(11) **EP 4 326 585 B1**
(45) Veröffentlichungstag und Bekanntmachung des Hinweises auf die Patenterteilung: **03.12.2025**
(21) Anmeldenummer: 22708801.0
(22) Anmeldetag: 09.02.2022
(51) Int. Cl.: B60R 25/24, G07C 9/00, H04W 4/80, H04W 8/00, H04W 84/18

(54) **VERFAHREN ZUM ENTRIEGELN UND ZUM FREIGEBEN EINES MOTORSTARTS EINES KRAFTFAHRZEUGS**
METHOD FOR UNLOCKING A MOTOR VEHICLE AND ENABLING THE ENGINE START
PROCÉDÉ DE DÉVERROUILLAGE DE VÉHICULE AUTOMOBILE PERMETTANT LE DÉMARRAGE DU MOTEUR

(30) Priorität: 23.04.2021 DE 102021002166
(43) Veröffentlichungstag der Anmeldung: 28.02.2024
(73) Patentinhaber: Mercedes-Benz Group AG, 70372 Stuttgart (DE)
(72) Erfinder: BETZ, Konrad, 70176 Stuttgart (DE)
(74) Vertreter: Novagraaf Group
(86) Internationale Anmeldenummer: PCT/EP2022/053077
(87) Internationale Veröffentlichungsnummer: WO 2022/223164

(56) Entgegenhaltungen:
- DE-A1- 102016 217 318
- JP-A- 2014 175 856
- US-A1- 2017 149 946
- US-A1- 2017 164 192
- US-A1- 2020 186 970

## Beschreibung

Die Erfindung betrifft ein Verfahren zum Entriegeln und zum Freigeben eines Motorstarts eines Kraftfahrzeugs mittels eines Fahrzeugschlüssels des Kraftfahrzeugs. Die Erfindung betrifft auch das Kraftfahrzeug mit einem Steuerungssystem zum Ausführen des genannten Verfahrens.

Aus US 2017 0164192 A1 und US 2017 0149946 A1 ist bekannt, einen digitalen Fahrzeugschlüssel zum Entriegeln und zum Freigeben eines Motorstarts eines Kraftfahrzeugs zu verwenden. Bekannt ist es auch, ein Steuerungssystem des Kraftfahrzeugs mit dem digitalen Fahrzeugschlüssel über eine BLE-Verbindung (BLE: Bluetooth Low Energy) zu verbinden. Dazu kann das Kraftfahrzeug je nach der Fahrzeugarchitektur mehrere BLE-Knoten in seinem Innenraum und außerhalb seines Innenraums - beispielweise an den Stoßfängern - umfassen. Dadurch kann eine lückenlose BLE-Abdeckung im und um das Kraftfahrzeug gewährleistet werden. In der Annäherung des Kunden verbindet sich der digitale Fahrzeugschlüssel mit einem beliebigen BLE-Knoten außerhalb des Innenraums des Kraftfahrzeugs und das Steuerungssystem kann nun das Kraftfahrzeug entriegeln. Nachteiligerweise verschlechtert sich die BLE-Verbindung mit dem BLE-Knoten drastisch und kann sogar abgebrochen werden, wenn der Kunde nun nach einem erfolgreichen Entriegeln des Kraftfahrzeugs in den Innenraum eintritt. Je nach dem Fahrzeugschlüssel - und insbesondere je nach dem BLE-Überwachungsintervall bzw. nach dem BLE Supervision Timeout - kann der Aufbau einer neuen BLE-Verbindung mit einem anderen BLE-Knoten des Kraftfahrzeugs bis zu 20 Sekunden dauern. Nach dem erfolgreichen verbinden und vor dem Freigeben des Motorstarts des Kraftfahrzeugs werden zudem Daten über die BLE-Verbindung für eine Fahrberechtigung zwischen dem Fahrzeugschlüssel und dem Steuerungssystem ausgetauscht. In dieser Zeit ist kein Starten des Kraftfahrzeugs möglich. Die JP 2014 175856 A offenbart eine Fahrzeugsteuereinrichtung. Die DE 10 2016 217318 A1 offenbart ein Verfahren, ein Computerprogramm und eine Vorrichtung zum Überprüfen einer Berechtigung eines mobilen Kommunikationsgeräts. Die US 2020/186970 A1 offenbart ein System und ein Verfahren zum Lokalisieren einer tragbaren Einrichtung.

Die Aufgabe der Erfindung ist es daher, ein verbessertes oder zumindest alternatives Verfahren zum Entriegeln und zum Freigeben eines Motorstarts eines Kraftfahrzeugs mittels eines Fahrzeugschlüssels anzugeben, bei dem die beschriebenen Nachteile überwunden werden. Zudem soll ein Kraftfahrzeug mit einem Steuerungssystem zum Ausführen des Verfahrens bereitgestellt werden.

Diese Aufgaben werden erfindungsgemäß durch den Gegenstand der unabhängigen Ansprüche gelöst. Vorteilhafte Ausführungsformen sind Gegenstand der abhängigen Ansprüche.

Ein erfindungsgemäßes Verfahren ist zum Entriegeln und zum Freigeben eines Motorstarts eines Kraftfahrzeugs mittels eines Fahrzeugschlüssels des Kraftfahrzeugs vorgesehen. Das Kraftfahrzeug weist dabei ein Steuerungssystem zum Ausführen des Verfahrens auf. Zudem weist das Kraftfahrzeug wenigstens einen äußeren Knoten zum drahtlosen Verbinden mit dem Fahrzeugschlüssel außerhalb eines Innenraums des Kraftfahrzeugs auf. Zudem weist das Kraftfahrzeug wenigstens einen inneren Knoten zum drahtlosen Verbinden mit dem Fahrzeugschlüssel innerhalb des Innenraum des Kraftfahrzeugs auf. In dem Verfahren wird zuerst ein Herstellen einer drahtlosen Verbindung zwischen dem Fahrzeugschlüssel und dem wenigstens einen äußeren Knoten des Kraftfahrzeugs vorgenommen. Danach wird in dem Verfahren ein Entriegeln des Kraftfahrzeugs durch das Steuerungssystem vorgenommen. Danach wird in dem Verfahren ein erzwungenes Beenden der bestehenden drahtlosen Verbindung zwischen dem Fahrzeugschlüssel und dem wenigstens einen äußeren Knoten durch das Steuerungssystem vorgenommen. Danach wird ein erzwungenes Herstellen einer neuen drahtlosen Verbindung zwischen dem Fahrzeugschlüssel und dem wenigstens einen inneren Knoten des Kraftfahrzeugs durch das Steuerungssystem vorgenommen. Das Herstellen der drahtlosen Verbindung, das Entriegeln des Kraftfahrzeugs, das erzwungene Beenden der bestehenden drahtlosen Verbindung und das erzwungene Herstellen der neuen drahtlosen Verbindung werden in dem Verfahren zweckgemäß in der angegebenen Reihenfolge nacheinander durchgeführt.

Der Begriff "Fahrzeugschlüssel" ist im Zusammenhang mit der vorliegenden Erfindung breit auszulegen. Vorteilhafterweise kann der Fahrzeugschlüssel digital sein.

Vorteilhafterweise kann der Fahrzeugschlüssel ein sogenanntes Smart-Device sein. Vorteilhafterweise kann die drahtlose Verbindung eine BLE-basierte Verbindung (BLE: Bluetooth Low Energy) sein. Mit dem Innenraum des Kraftfahrzeugs ist in erster Linie der Fahrgastraum des Kraftfahrzeugs gemeint. Der wenigstens eine äußere Knoten ist dabei zum drahtlosen Verbinden mit dem Fahrzeugschlüssel, der sich aktuell außerhalb des Innenraums des Kraftfahrzeugs befindet, vorgesehen. Zweckgemäß kann der wenigstens eine äußere Knoten außen an dem Kraftfahrzeug - beispielweise an den Stoßfängern des Kraftfahrzeugs - positioniert sein. Der wenigstens eine innere Knoten ist zum drahtlosen Verbinden mit dem Fahrzeugschlüssel, der sich aktuell innerhalb des Innenraum des Kraftfahrzeugs befindet, vorgesehen. Zweckgemäß kann der wenigstens eine innere Knoten innerhalb des Innenraums des Kraftfahrzeugs - beispielweise in der Mittelkonsole - angeordnet sein.

Mit dem erfindungsgemäßen Verfahren wird das Beenden der bestehenden drahtlosen Verbindung von dem Steuerungssystem erzwungen, so dass die neue drahtlose Verbindung relativ schnell aufgebaut werden kann. Dabei wird die Zeit, die der Kunde zum Öffnen einer Fahrertür und zum Eintreten in das Kraftfahrzeug braucht, zum Herstellen der neuen drahtlosen Verbindung zwischen dem Fahrzeugschlüssel und dem inneren Knoten genutzt. Ist der Kunde in das Kraftfahrzeug eingetreten, so ist die neue drahtlose Verbindung bereits aufgebaut und das Kraftfahrzeug kann schnell gestartet werden.

Vorgesehen ist, dass das erzwungene Beenden der bestehenden drahtlosen Verbindung zwischen dem Fahrzeugschlüssel und dem wenigstens einen äußeren Knoten durch das Steuerungssystem erst nach einem Öffnen einer Fahrertür des Kraftfahrzeugs erfolgt. Mit anderen Worten wird das Öffnen der Fahrertür von dem Steuerungssystem als ein Triggersignal zum erzwungenen Beenden der bestehenden drahtlosen Verbindung genutzt. Dabei wird die bestehende drahtlose Verbindung nicht unterbrochen, solange der Kunde in das Kraftfahrzeug nicht eingetreten ist. Dadurch kann der Kunde das Kraftfahrzeug - beispielweise nach einem Einladen von Einkäufen und ohne ein einschließendes Eintreten in das Kraftfahrzeug - ohne eine Unterbrechung der bestehenden drahtlosen Verbindung problemlos schließen.

Vorteilhafterweise kann das erzwungene Beenden der bestehenden drahtlosen Verbindung zwischen dem Fahrzeugschlüssel und dem äußeren Knoten durch das Steuerungssystem dadurch erfolgen, dass alle äußeren Knoten durch das Steuerungssystem deaktiviert werden. Vorteilhafterweise kann bei dem erzwungenen Herstellen der neuen drahtlosen Verbindung zwischen dem Fahrzeugschlüssel und dem wenigstens einen inneren Knoten des Kraftfahrzeugs der Fahrzeugschlüssel sich ausschließlich mit dem wenigstens einen inneren Knoten drahtlos verbinden. Vorteilhafterweise kann das erzwungene Herstellen der neuen drahtlosen Verbindung zwischen dem Fahrzeugschlüssel und dem wenigstens einen inneren Knoten des Kraftfahrzeugs durch das Steuerungssystem dadurch erfolgen, dass der Fahrzeugschlüssel sich nach dem erzwungenen Beenden der bestehenden drahtlosen Verbindung zwischen dem Fahrzeugschlüssel und dem äußeren Knoten ausschließlich mit dem wenigstens einen inneren Knoten drahtlos verbinden kann.

Vorteilhafterweise kann vorgesehen sein, dass der wenigstens eine äußere Knoten durch ein Zugangssystem des Steuerungssystems und der wenigstens eine innere Knoten durch ein Fahrberechtigungssystems des Steuerungssystems geregelt bzw. gesteuert werden. Vorteilhafterweise kann das Zugangssystem beispielweise die Zugangsberechtigung überprüfen und das Entriegeln des Kraftfahrzeugs regeln bzw. steuern. Vorteilhafterweise kann das Fahrberechtigungssystems beispielweise die Fahrberechtigung überprüfen und das Freigeben eines Motorstarts des Kraftfahrzeugs regeln bzw. steuern. Es versteht sich dabei, dass das Zugangssystem und das Fahrberechtigungssystem auch weitere Funktionen des Kraftfahrzeugs regeln bzw. steuern können.

Vorteilhafterweise kann vorgesehen sein, dass ein Zuständigkeitswechsel von dem Zugangssystem des Steuerungssystems auf das Fahrberechtigungssystems des Steuerungssystems durch das erzwungene Beenden der bestehenden drahtlosen Verbindung zwischen dem Fahrzeugschlüssel und dem wenigstens einen äußeren Knoten und durch das erzwungene Herstellen der neuen drahtlosen Verbindung zwischen dem Fahrzeugschlüssel und dem wenigstens einen inneren Knoten des Kraftfahrzeugs erfolgt. Mit anderen Worten wird die Zuständigkeit des Zugangssystems mit dem erzwungenen Beenden der bestehenden Verbindung beendet und die Zuständigkeit des Fahrberechtigungssystems wird mit dem erzwungenen Herstellen der neuen drahtlosen Verbindung gestartet.

Vorteilhafterweise kann vorgesehen sein, dass das Steuerungssystem, insbesondere das Fahrberechtigungssystem, nach dem erzwungenen Herstellen der neuen drahtlosen Verbindung zwischen dem Fahrzeugschlüssel und dem wenigstens einen inneren Knoten des Kraftfahrzeugs ein Freigeben des Motorstarts des Kraftfahrzeugs initiiert.

Vorteilhafterweise kann vorgesehen sein, dass das Steuerungssystem, insbesondere das Fahrberechtigungssystem, nach dem erzwungenen Herstellen der neuen drahtlosen Verbindung zwischen dem Fahrzeugschlüssel und dem wenigstens einen inneren Knoten des Kraftfahrzeugs Klemmen zum Erzeugen eines permanenten oder eines geschalteten Zündpuls freigibt und/oder eine Wegfahrsperre, die vorzugsweise ein Getriebesteuergerät und/oder eine Lenkradsperre umfasst, deaktiviert. Alternativ oder zusätzlich kann das Steuerungssystem, insbesondere das Fahrberechtigungssystem, auch eine Klimakontrolleinheit freischalten. Das Freigeben der Klemmen und/oder das Deaktivieren der Wegfahrsperre und/oder das Freischalten der Klimakontrolleinheit können dabei zeitgleich oder nacheinander erfolgen.

Die Erfindung betrifft auch ein Kraftfahrzeug mit einem Fahrzeugschlüssel und einem Steuerungssystem. Das Kraftfahrzeug weist dabei wenigstens einen äußeren Knoten zum drahtlosen Verbinden mit dem Fahrzeugschlüssel außerhalb eines Innenraums des Kraftfahrzeugs auf. Das Kraftfahrzeug weist zudem wenigstens einen inneren Knoten zum drahtlosen Verbinden mit dem Fahrzeugschlüssel innerhalb des Innenraum des Kraftfahrzeugs auf. Erfindungsgemäß ist das Steuerungssystem des Kraftfahrzeugs zum Ausführen des oben beschriebenen Verfahrens ausgelegt. Um Wiederholungen zu vermeiden, wird an dieser Stelle auf die obigen Ausführungen verwiesen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine rein schematische Ansicht eines erfindungsgemäßen Kraftfahrzeugs;
- Fig. 2: einen schematischen Verlauf eines erfindungsgemäßen Verfahrens.

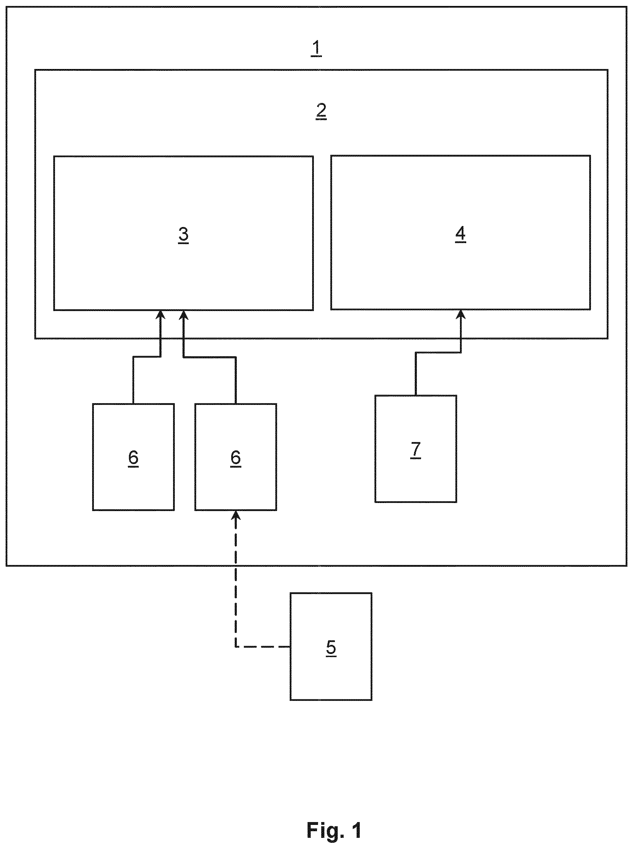

Fig. 1 zeigt eine rein schematische Ansicht eines erfindungsgemäßen Kraftfahrzeugs 1. Das Kraftfahrzeug 1 weist dabei ein Steuerungssystem 2 mit einem Zugangssystem 3 und einem Fahrberechtigungssystem 4 sowie einen digitalen Fahrzeugschlüssel 5 auf. Zudem weist das Kraftfahrzeug 1 mehrere - hier zwei - äußere Knoten 6 und einen inneren Knoten 7 auf. Die äußeren Knoten 6 sind dabei dem Zugangssystem 3 zugeordnet, wie mit durchgezogenen Pfeilen angedeutet ist. Der innere Knoten 7 ist dem Fahrberechtigungssystem 4 zugeordnet, wie mit einem weiteren durchbrochenen Pfeil angedeutet ist.

Der jeweilige äußere Knoten 6 ist dabei - hier nicht gezeigt - außen an dem Kraftfahrzeug 1 angeordnet und kann sich mit dem Fahrzeugschlüssel 5 insbesondere verbinden, wenn sich der Fahrzeugschlüssel 5 aktuell außerhalb eines Innenraums des Kraftfahrzeugs 1 bzw. außerhalb des Kraftfahrzeugs 1 befindet. Der jeweilige äußere Knoten 6 ist dabei zum drahtlosen Verbinden mit dem Fahrzeugschlüssel 5 vorgesehen. Die drahtlose Verbindung kann beispielweise eine BLE-basierte Verbindung sein und ist hier mit durchbrochenen Pfeilen angedeutet. Dabei kann der eine äußere Knoten 6 beispielweise an einem vorderen Stoßfänger des Kraftfahrzeugs 1 und der andere äußere Knoten 6 beispielweise an einem hinteren Stoßfänger des Kraftfahrzeugs 1 angeordnet sein.

Der innere Knoten 7 ist - hier nicht gezeigt - innerhalb eines Innenraums des Kraftfahrzeugs 1 angeordnet und kann sich mit dem Fahrzeugschlüssel 5 insbesondere verbinden, wenn der Fahrzeugschlüssel 5 aktuell innerhalb des Innenraums des Kraftfahrzeugs 1 bzw. innerhalb des Kraftfahrzeugs 1 befindet. Der innere Knoten 7 ist auf gleiche Weise zum drahtlosen Verbinden mit dem Fahrzeugschlüssel 5 vorgesehen. Dabei kann der innere Knoten 7 beispielweise in der Mittelkonsole des Kraftfahrzeugs 1 angeordnet sein.

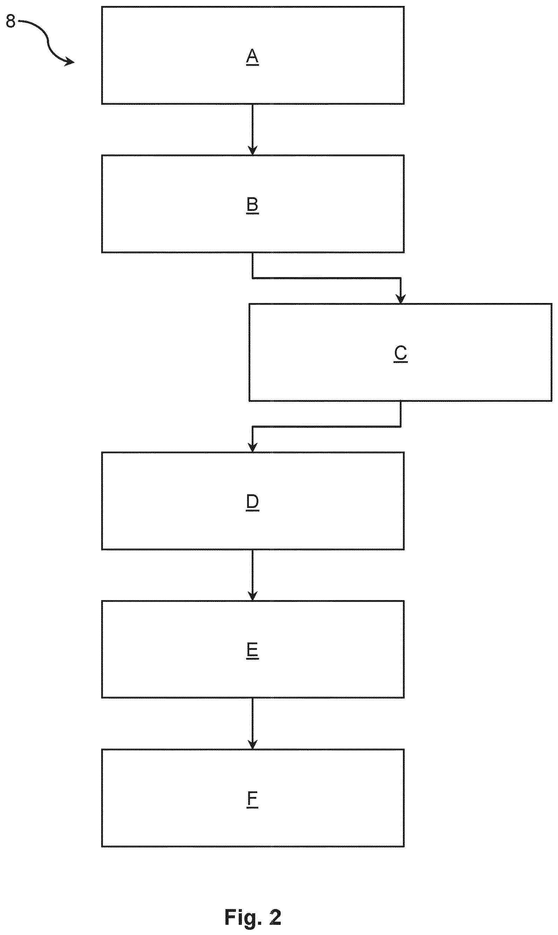

Fig. 2 zeigt schematisch einen Verlauf eines erfindungsgemäßen Verfahrens 8. In dem erfindungsgemäßen Verfahren 8 wird zuerst der Schritt A durchgeführt. Im Schritt A wird dabei ein Herstellen einer drahtlosen Verbindung zwischen dem Fahrzeugschlüssel 5 und einem der äußeren Knoten 6 des Kraftfahrzeugs 1 vorgenommen. Der Schritt A ist auch in Fig. 1 gezeigt. Danach wird in einem Schritt B ein Entriegeln des Kraftfahrzeugs 1 durch das Steuerungssystem 2 bzw. das Zugangssystem 3 des Steuerungssystems 2 vorgenommen.

In einem Schritt C erfolgt ein Öffnen einer Fahrertür des Kraftfahrzeugs 1. Das Öffnen der Fahrertür in dem Schritt C erfolgt dabei durch den Kunden und wird in dem Verfahren 8 als Triggersignal zu einem nächsten Schritt D verwendet. Vorteilhafterweise kann das Verfahren 8 auch ohne den Schritt C durchgeführt werden. In diesem Fall wird nach dem Schritt B der Schritt D durchgeführt.

In dem Schritt D wird ein erzwungenes Beenden der bestehenden drahtlosen Verbindung zwischen dem Fahrzeugschlüssel 5 und dem äußeren Knoten 6 durch das Steuerungssystem 2 vorgenommen. Dabei werden alle äußeren Knoten 6 deaktiviert. In einem nachfolgenden Schritt E wird ein erzwungenes Herstellen einer neuen drahtlosen Verbindung zwischen dem Fahrzeugschlüssel 5 und dem inneren Knoten 7 vorgenommen.

Danach kann in einem Schritt F ein Freigegen eines Motorstarts des Kraftfahrzeugs 1 durch das Steuerungssystem 2 bzw. das Fahrberechtigungssystem 4 vorgenommen werden. Das Starten des Kraftfahrzeugs 1 kann dann anschließend durch den Kunden ausgelöst bzw. initiiert werden. Zudem kann das Steuerungssystem 2 bzw. das Fahrberechtigungssystem 4 bei dem Freigeben des Motorstarts des Kraftfahrzeugs 1 eine Wegfahrsperre deaktivieren. Zudem kann auch eine Klimakontrolleinheit oder auch weitere Systeme des Kraftfahrzeugs 1 vor oder nach dem Schritt F freischaltet werden.

## Patentansprüche

1. Verfahren (8) zum Entriegeln (B) und zum Freigeben (F) eines Motorstarts eines Kraftfahrzeugs (1) mittels eines Fahrzeugschlüssels (5) des Kraftfahrzeugs (1),
- wobei das Kraftfahrzeug (1) wenigstens einen äußeren Knoten (6) zum drahtlosen Verbinden mit dem Fahrzeugschlüssel (5) außerhalb eines Innenraums des Kraftfahrzeugs (1) aufweist,
- wobei das Kraftfahrzeug (1) wenigstens einen inneren Knoten (7) zum drahtlosen Verbinden mit dem Fahrzeugschlüssel (5) innerhalb des Innenraum des Kraftfahrzeugs (1) aufweist,
- wobei das Kraftfahrzeug (1) ein Steuerungssystem (2) zum Ausführen des Verfahrens (8) aufweist,
umfassend folgende Schritte in folgenden Reihenfolge:
- Herstellen (A) einer drahtlosen Verbindung zwischen dem Fahrzeugschlüssel (5) und dem wenigstens einen äußeren Knoten (6) des Kraftfahrzeugs (1);
- Entriegeln (B) des Kraftfahrzeugs (1) durch das Steuerungssystem (2);
- Erzwungenes Beenden (D) der bestehenden drahtlosen Verbindung zwischen dem Fahrzeugschlüssel (5) und dem wenigstens einen äußeren Knoten (6) durch das Steuerungssystem (2);
- Erzwungenes Herstellen (E) einer neuen drahtlosen Verbindung zwischen dem Fahrzeugschlüssel (5) und dem wenigstens einen inneren Knoten (7) des Kraftfahrzeugs (1) durch das Steuerungssystem (2);
**dadurch gekennzeichnet, dass**
das erzwungene Beenden (D) der bestehenden drahtlosen Verbindung zwischen dem Fahrzeugschlüssel (5) und dem wenigstens einen äußeren Knoten (6) durch das Steuerungssystem (2) erst nach einem Öffnen (C) einer Fahrertür des Kraftfahrzeugs (1) erfolgt.

2. Verfahren nach Anspruch 1,
**dadurch gekennzeichnet, dass**
das erzwungene Beenden (D) der bestehenden drahtlosen Verbindung zwischen dem Fahrzeugschlüssel (5) und dem äußeren Knoten (6) durch das Steuerungssystem (2) dadurch erfolgt, dass alle äußeren Knoten (6) durch das Steuerungssystem (2) deaktiviert werden.

3. Verfahren nach Anspruch 1 oder 2,
**dadurch gekennzeichnet, dass**
bei dem erzwungenen Herstellen (E) der neuen drahtlosen Verbindung zwischen dem Fahrzeugschlüssel (5) und dem wenigstens einen inneren Knoten (7) des Kraftfahrzeugs (1) der Fahrzeugschlüssel (5) sich ausschließlich mit dem wenigstens einen inneren Knoten (7) drahtlos verbinden kann.

4. Verfahren nach einem der vorangehenden Ansprüche,
**dadurch gekennzeichnet, dass**
das erzwungene Herstellen (E) der neuen drahtlosen Verbindung zwischen dem Fahrzeugschlüssel (5) und dem wenigstens einen inneren Knoten (7) des Kraftfahrzeugs (1) durch das Steuerungssystem (2) dadurch erfolgt, dass der Fahrzeugschlüssel (5) sich nach dem erzwungenen Beenden (D) der bestehenden drahtlosen Verbindung zwischen dem Fahrzeugschlüssel (5) und dem äußeren Knoten (6) ausschließlich mit dem wenigstens einen inneren Knoten (7) drahtlos verbinden kann.

5. Verfahren nach einem der vorangehenden Ansprüche,
**dadurch gekennzeichnet, dass**
der wenigstens eine äußere Knoten (6) durch ein Zugangssystem (3) des Steuerungssystems (1) und der wenigstens eine innere Knoten (7) durch ein Fahrberechtigungssystems (4) des Steuerungssystems (2) geregelt oder gesteuert werden.

6. Verfahren nach Anspruch 5,
**dadurch gekennzeichnet, dass**
ein Zuständigkeitswechsel von dem Zugangssystem (3) des Steuerungssystems (2) auf das Fahrberechtigungssystems (4) des Steuerungssystems (2) durch das erzwungene Beenden (D) der bestehenden drahtlosen Verbindung zwischen dem Fahrzeugschlüssel (5) und dem wenigstens einen äußeren Knoten (6) und durch das erzwungene Herstellen (E) der neuen drahtlosen Verbindung zwischen dem Fahrzeugschlüssel (5) und dem wenigstens einen inneren Knoten (7) des Kraftfahrzeugs (1) erfolgt.

7. Verfahren nach einem der vorangehenden Ansprüche,
**dadurch gekennzeichnet, dass**
nach dem erzwungenen Herstellen (E) der neuen drahtlosen Verbindung zwischen dem Fahrzeugschlüssel (5) und dem wenigstens einen inneren Knoten (7) des Kraftfahrzeugs (1) das Steuerungssystem (2) ein Freigeben (F) des Motorstarts des Kraftfahrzeugs (1) initiiert.

8. Verfahren nach einem der vorangehenden Ansprüche,
**dadurch gekennzeichnet, dass**
- nach dem erzwungenen Herstellen (E) der neuen drahtlosen Verbindung zwischen dem Fahrzeugschlüssel (5) und dem wenigstens einen inneren Knoten (7) des Kraftfahrzeugs (1) das Steuerungssystem (2) Klemmen zum Erzeugen eines permanenten oder eines geschalteten Zündpuls freigibt und/oder eine Wegfahrsperre deaktiviert, und/oder
- nach dem erzwungenen Herstellen (E) der neuen drahtlosen Verbindung zwischen dem Fahrzeugschlüssel (5) und dem wenigstens einen inneren Knoten (7) des Kraftfahrzeugs (1) das Steuerungssystem (2) eine Klimakontrolleinheit freischaltet.

9. Kraftfahrzeug (1) mit einem Fahrzeugschlüssel (5) und einem Steuerungssystem (2),
- wobei das Kraftfahrzeug (1) wenigstens einen äußeren Knoten (6) zum drahtlosen Verbinden mit dem Fahrzeugschlüssel (5) außerhalb eines Innenraums des Kraftfahrzeugs (1) aufweist,
- wobei das Kraftfahrzeug (1) wenigstens einen inneren Knoten (7) zum drahtlosen Verbinden mit dem Fahrzeugschlüssel (5) innerhalb des Innenraum des Kraftfahrzeugs (1) aufweist,
**dadurch gekennzeichnet,**
**dass** das Steuerungssystem (2) zum Ausführen des Verfahrens (8) nach einem der vorangehenden Ansprüche ausgelegt ist.

## Claims

1. Method (8) for unlocking (B) and enabling (F) an engine start of a motor vehicle (1) by means of a vehicle key (5) of the motor vehicle (1),
- wherein the motor vehicle (1) has at least one outer node (6) for wireless connection to the vehicle key (5) outside an interior of the motor vehicle (1),
- wherein the motor vehicle (1) has at least one inner node (7) for wireless connection to the vehicle key (5) inside the interior of the motor vehicle (1),
- wherein the motor vehicle (1) has a control system (2) for carrying out the method (8),
the method comprising the following steps in the following order:
- establishing (A) a wireless connection between the vehicle key (5) and the at least one outer node (6) of the motor vehicle (1);
- unlocking (B), by means of the control system (2), the motor vehicle (1);
- forcibly ending (D), by means of the control system (2), the existing wireless connection between the vehicle key (5) and the at least one outer node (6);
- forcibly establishing (E), by means of the control system (2), a new wireless connection between the vehicle key (5) and the at least one inner node (7) of the motor vehicle (1);
**characterized in that**
the forcible ending (D), by the control system (2), of the existing wireless connection between the vehicle key (5) and the at least one outer node (6) is effected only after a driver's door of the motor vehicle (1) has been opened (C).

2. Method according to claim 1,
**characterized in that**
the forcible ending (D), by the control system (2), of the existing wireless connection between the vehicle key (5) and the outer node (6) is effected by the control system (2) deactivating all outer nodes (6).

3. Method according to claim 1 or 2,
**characterized in that**
when the new wireless connection is forcibly established (E) between the vehicle key (5) and the at least one inner node (7) of the motor vehicle (1), the vehicle key (5) can exclusively connect wirelessly to the at least one inner node (7).

4. Method according to any of the preceding claims,
**characterized in that**
the forcible establishment (E), by the control system (2), of the new wireless connection between the vehicle key (5) and the at least one inner node (7) of the motor vehicle (1) is effected by the vehicle key (5) being able to exclusively connect wirelessly to the at least one inner node (7) after the existing wireless connection between the vehicle key (5) and the outer node (6) has been the forcibly ended (D).

5. Method according to any of the preceding claims,
**characterized in that**
the at least one outer node (6) is regulated or controlled by an access system (3) of the control system (1) and the at least one inner node (7) is regulated or controlled by a drive authorization system (4) of the control system (2).

6. Method according to claim 5,
**characterized in that**
a switch of responsibility from the access system (3) of the control system (2) to the drive authorization system (4) of the control system (2) is effected by forcibly ending (D) the existing wireless connection between the vehicle key (5) and the at least one outer node (6), and by forcibly establishing (E) the new wireless connection between the vehicle key (5) and the at least one inner node (7) of the motor vehicle (1).

7. Method according to any of the preceding claims,
**characterized in that**
after the new wireless connection between the vehicle key (5) and the at least one inner node (7) of the motor vehicle (1) has been forcibly established (E), the control system (2) initiates an enabling (F) of the engine start of the motor vehicle (1).

8. Method according to any of the preceding claims,
**characterized in that**
- after the new wireless connection between the vehicle key (5) and the at least one inner node (7) of the motor vehicle (1) has been forcibly established (E), the control system (2) enables terminals to generate a permanent or switched ignition pulse and/or deactivates an immobilizer, and/or
- after the new wireless connection between the vehicle key (5) and the at least one inner node (7) of the motor vehicle (1) has been forcibly established (E), the control system (2) activates a climate control unit.

9. Motor vehicle (1) comprising a vehicle key (5) and a control system (2),
- wherein the motor vehicle (1) has at least one outer node (6) for wireless connection to the vehicle key (5) outside an interior of the motor vehicle (1),
- wherein the motor vehicle (1) has at least one inner node (7) for wireless connection to the vehicle key (5) inside the interior of the motor vehicle (1),
**characterized in that**
- the control system (2) is configured to carry out the method (8) according to any of the preceding claims.

## Revendications

1. Procédé (8) permettant le déverrouillage (B) et la libération (F) d'un démarrage de moteur d'un véhicule automobile (1) à l'aide d'une clé de véhicule (5) du véhicule automobile (1),
- dans lequel le véhicule automobile (1) présente au moins un nœud externe (6) pour la connexion sans fil avec la clé de véhicule (5) à l'extérieur d'un habitacle du véhicule automobile (1),
- dans lequel le véhicule automobile (1) présente au moins un nœud interne (7) pour la connexion sans fil avec la clé de véhicule (5) à l'intérieur de l'habitacle du véhicule automobile (1),
- dans lequel le véhicule automobile (1) présente un système de commande (2) pour l'a mise en œuvre du procédé (8),
comprenant les étapes suivantes dans l'ordre suivant :
- établissement (A) d'une connexion sans fil entre la clé de véhicule (5) et l'au moins un nœud externe (6) du véhicule automobile (1) ;
- déverrouillage (B) du véhicule automobile (1) par le système de commande (2) ;
- arrêt forcé (D), par le système de commande (2), de la connexion sans fil existante entre la clé de véhicule (5) et l'au moins un nœud externe (6) ;
- établissement forcé (E), par le système de commande (2), d'une nouvelle connexion sans fil entre la clé de véhicule (5) et l'au moins un nœud interne (7) du véhicule automobile (1) ;
**caractérisé en ce que**
l'arrêt forcé (D) de la connexion sans fil existante entre la clé de véhicule (5) et l'au moins un nœud externe (6) par le système de commande (2) n'a lieu qu'après une ouverture (C) d'une porte conducteur du véhicule automobile (1).

2. Procédé selon la revendication 1,
**caractérisé en ce que**
l'arrêt forcé (D) de la connexion sans fil existante entre la clé de véhicule (5) et le nœud externe (6) est effectué par le système de commande (2) à travers la désactivation de tous les nœuds externes (6) par le système de commande (2).

3. Procédé selon la revendication 1 ou 2,
**caractérisé en ce que**
lors de l'établissement forcé (E) de la nouvelle connexion sans fil entre la clé de véhicule (5) et l'au moins un nœud interne (7) du véhicule automobile (1), la clé de véhicule (5) peut se connecter sans fil exclusivement à l'au moins un nœud interne (7).

4. Procédé selon l'une des revendications précédentes,
**caractérisé en ce que**
l'établissement forcé (E) de la nouvelle connexion sans fil entre la clé de véhicule (5) et l'au moins un nœud interne (7) du véhicule automobile (1) est effectué par le système de commande (2) par la connexion sans fil de la clé de véhicule (5) exclusivement à l'au moins un nœud interne (7) après l'arrêt forcé (D) de la connexion sans fil existante entre la clé de véhicule (5) et le nœud externe (6).

5. Procédé selon l'une des revendications précédentes,
**caractérisé en ce que**
l'au moins un nœud externe (6) est réglé ou commandé par un système d'accès (3) du système de commande (1) et l'au moins un nœud interne (7) est réglé ou commandé par un système d'autorisation de conduite (4) du système de commande (2).

6. Procédé selon la revendication 5,
**caractérisé en ce**
**qu**'un transfert de compétence du système d'accès (3) du système de commande (2) au système d'autorisation de conduite (4) du système de commande (2) s'effectue par l'arrêt forcé (D) de la connexion sans fil existante entre la clé de véhicule (5) et l'au moins un nœud externe (6) et par l'établissement forcé (E) de la nouvelle connexion sans fil entre la clé de véhicule (5) et l'au moins un nœud interne (7) du véhicule automobile (1).

7. Procédé selon l'une des revendications précédentes,
**caractérisé en ce**
**qu**'après l'établissement forcé (E) de la nouvelle connexion sans fil entre la clé de véhicule (5) et l'au moins un nœud interne (7) du véhicule automobile (1), le système de commande (2) initie une libération (F) du démarrage de moteur du véhicule automobile (1).

8. Procédé selon l'une des revendications précédentes,
**caractérisé en ce**
- **qu**'après l'établissement forcé (E) de la nouvelle connexion sans fil entre la clé de véhicule (5) et l'au moins un nœud interne (7) du véhicule automobile (1), le système de commande (2) libère des bornes pour la génération d'une impulsion d'allumage permanente ou commutée et/ou désactive un dispositif antidémarrage, et/ou
- **qu**'après l'établissement forcé (E) de la nouvelle liaison sans fil entre la clé de véhicule (5) et l'au moins un nœud interne (7) du véhicule automobile (1), le système de commande (2) active une unité de commande de climatisation.

9. Véhicule automobile (1) comportant une clé de véhicule (5) et un système de commande (2),
- dans lequel le véhicule automobile (1) présente au moins un nœud externe (6) pour la connexion sans fil avec la clé de véhicule (5) à l'extérieur d'un habitacle du véhicule automobile (1),
- dans lequel le véhicule automobile (1) présente au moins un nœud interne (7) pour la connexion sans fil avec la clé de véhicule (5) à l'intérieur de l'habitacle du véhicule automobile (1),
**caractérisé en ce**
**que** le système de commande (2) est configuré pour la mise en œuvre du procédé (8) selon l'une des revendications précédentes.
